# EUROPÄISCHE PATENTSCHRIFT

(11) **EP 0 846 054 B1**
(45) Veröffentlichungstag und Bekanntmachung des Hinweises auf die Patenterteilung: **22.09.2004**
(21) Anmeldenummer: 97924852.3
(22) Anmeldetag: 16.06.1997
(51) Int. Cl.: B29D 23/20, B29C 65/52, B29C 65/48, B29C 65/70, B65D 35/12

(54) **VERFAHREN ZUR HERSTELLUNG VON VERPACKUNGSTUBEN**
PROCESS FOR PRODUCING PACKAGING TUBES
PROCEDE POUR FABRIQUER DES TUBES D'EMBALLAGE

(30) Priorität: 25.06.1996 CH 158596
(43) Veröffentlichungstag der Anmeldung: 10.06.1998
(73) Patentinhaber: Packtech Limited, Kingstown (VC)
(72) Erfinder: SCHWYN, Bernhard, Andreas, CH-6004 Luzern (CH)
(74) Vertreter: Peege, Klaus
(86) Internationale Anmeldenummer: PCT/CH1997/000240
(87) Internationale Veröffentlichungsnummer: WO 1997/049545

(56) Entgegenhaltungen:
- WO-A-97/18073
- DE-A- 1 479 156
- DE-A- 2 235 476
- DE-B- 1 629 265
- FR-A- 1 351 143
- FR-A- 1 407 064
- FR-A- 2 158 169
- FR-E- 85 906
- GB-A- 569 092
- GB-A- 1 271 852
- US-A- 3 960 624
- US-A- 4 132 331
- US-A- 4 229 155
- US-A- 4 976 797
- US-A- 5 211 798

## Beschreibung

Die Erfindung betrifft ein Verfahren zur Herstellung von Verpackungstuben nach dem Oberbegriff des Patentanspruches 1. Ein solches Verfahren ist z.B. aus der FR-A-2158169 bekannt.

Die Fertigung von Verpackungstuben, bestehend aus einem ein- oder mehrschichtigen Kunststofflaminat gebildeten Tubenrohr, die Bezeichnung mehrschichtiges Kunststofflaminat umfasst auch ein eine metallische (Aluminium) Sperrschicht enthaltendes Kunststofflaminat und einem aus einem Kunststoff gebildeten Tubenkopf wird im wesentlichen von zwei Techniken beherrscht, die sich dadurch unterscheiden, indem bei der einen ein vorgefertigter Tubenkopf mit einem Tubenrohr verbunden wird (folgend auch kurz "Fertigkopftechnik" genannt), während bei der anderen das Tubenrohr bei Bildung, d.h. Formgebung des Tubenkopfes mit dem Tubenrohr verbunden wird (folgend auch kurz "Anformtechnik" genannt). Die Erfindung liegt auf dem Gebiet ersterer also auf dem Gebiet der Fertigkopftechnik.

In der Tubenindustrie hat die Fertigkopftechnik eine nicht unbedeutende Verbreitung erfahren. Dies liegt daran, dass im Vergleich zur Anformtechnik höhere Ausbringungen an Tuben (Rohre mit Kopf) pro Zeiteinheit gegeben sind. Dazu stellen sich einfache Maschinenoperationen für das Zusammenführen von Köpfen und Rohren, relativ niedrige Investitionskosten für die Verbindungseinrichtungen Kopf/-Rohr und die Möglichkeit im Streckenzug des Verfahrens d.h. unmittelbar nach Verbindung Kopf/Rohr den Kopf mit Verschlüssen etc. zu bestücken. Die Nachteile der Fertigkopftechnik liegen in den sehr engen Fertigungstoleranzen von Tubenrohr und Kopf. Hinzu treten genau abzustimmende Werkstoffkompatibilitäten zwischen dem Werkstoff der inneren Schicht des Tubenrohres und dem Werkstoff des Tubenkopfes, wobei die innere Schicht die kritische Komponente einer guten Verbindung zwischen Rohr und Kopf darstellt. Beispielsweise ist die Verbindung von einem Rohr aus oder mit innerer Schicht aus Polyethylen mit einem Tubenkopf aus gleichem Werkstoff in einem Umfang schwierig, dass zur Lösung der Schwierigkeiten die Schulter des Tubenkopfes (Verbindung vom Tubenrohr zum Ausguss der Tube) mit einer Barriere oder Sperrschicht zu versehen ist. Diese kritische Werkstoffkompatibilität steht der vollen Ausschöpfung der Vorteile der Fertigkopftechnik entgegen, indem Rohre und Köpfe verschiedener Werkstoffe zwar vorgefertigt und am Lager gehalten aber nicht beliebig zur Befriedigung unterschiedlicher Packgutanforderungen kombiniert werden können.

Aus dem französischen Patent Nr. 2.158.169 ist ein Verfahren bekannt, das einen vorgefertigten Tubenkopf durch Spritz-giessen mit einem Tubenrohr verbindet. Hierbei besteht die wesentliche Schwierigkeit, die Verbindungsstelle so auszuführen, dass kein Übergang von der Tubenschulter zur Verbindungsstelle und von letzterer zum Tubenrohr sichtbar hervortritt. Das US Patent 4,132,331 schlägt vor, vermittels eines Verbindungskörpers, der die Schulter eines Tubenkopfes und ein vorderes Ende eines Tubenrohres übergreift, Tubenkopf und Tubenrohr miteinander zu verbinden. Die Verbindungskörper sind aus Kunststofffolien gestanzte Scheiben, die beim Verbindungsvorgang als Folge des dazu notwendigen Wärmeeintrages zu Verfärbungen neigen. Die Deutsche Offenlegungsschrift 2 235 476 hat ein Verfahren zum Gegenstand, dass beim Spritzgiessen die Sichtbarkeit des Anspritzpunktes beseitigt. Dazu wird vorgeschlagen, spritzgegossene Teile vor der vollständigen Erstarrung aus einer Form auszufahren und in dem Zustand in einer beheizten Matrize nachzupressen. Das Nachpressen führt zu inneren Spannungen, die zu Rissen in den Spritzteilen, im beschriebenen Fall handelt es sich um Anspritzringe, führen können. Die Englische Patentschrift 1 271 852 offenbart ein Verfahren zur Verbindung eines vorgefertigten Tubenkopfes mit einem Tubenrohr. Das Verfahren bedient sich dazu vorgefertigter, aus Kunststofffolien gestanzter Ver-bindungskörper, die nach dem Schweissvorgang zu Verfärbungen neigen.

Ausgehend von diesem Stand der Technik ist es Aufgabe der vorliegenden Erfindung die Fertigkopftechnik so weiterzubilden, dass ihre Vorteile erhalten, ihre Nachteile jedoch vermieden sind und diese Aufgabe wird vermittels der Merkmale des Patentanspruches 1 gelöst.

Mit dem erfindungsgemässen Verfahren zur Verbindung eines Tubenrohres mit einem vorgefertigten Tubenkopf werden bezüglich dieses Verfahrens folgende Vorteile erreicht. Die im Stand der Technik geforderten engen Toleranzen für das Tubenrohr und den Tubenkopf lassen sich beträchtlich aufweiten, mit der Konsequenz einfacherer und schnellerer Herstellung, d.h. Schrumpfungen bei der Kopfherstellung und Durchmesserabweichungen bei der Rohrfertigung sind keine Ausschussquellen mehr. Das erfindungsgemässe Verfahren ist mit relativ geringen Pressdrücken - verpresst wird eine relativ geringe Materialportion gegen Tubenschalter mit Einbettung eines Umfangsabschnittes am offenen Ende des Tubenrohres in die Materialportion - und verhältnismässig niedrigen Werkzeugtemperaturen betreibbar, wodurch sich die technische Ausgestaltung der Presswerkzeuge im Vergleich zu denen des Standes der Technik vereinfacht. Die vergleichsweise niedrigen Presstemperaturen in Verbindung mit vereinfachten Presswerkzeugen - ausreichend ist, den Pressstempel als Ring auszubilden - gestaltet die Verarbeitung vollständig konfektionierter Tubenköpfe, also von Tubenköpfen, die bereits mit Dreh- oder Klappverschlüssen, Austragsöffnungen versiegelnden Membranen, diffusionshemmenden Einlagen (Rondellen) angeordnet auf der, dem Rohrinneren zugewandten Seite der Schultern etc. ausgestaltet sind. Mit der Möglichkeit, fertig konfektionierte Köpfe zu verarbeiten, entfallen die bekannten, der Verpressung nachgeordneten individuellen Fertigungsschritte wie z.B. Aufbringung von Verschlüssen nach der Verpressung, so dass sich mit dem erfindungsgemässen Verfahren die Ausbringung pro Zeiteinheit an Tuben gegenüber dem, dem Stand der Technik, nochmals deutlich erhöhen , d.h. ohne grossen Aufwand für eine Vorrichtung zur Durchführung des Verfahrens auf 200 bis 300 Tuben pro Minute erhöhen lässt, eine Ausbringung, die mit dem bekannten Verfahren und den Vorrichtungen der Fertigkopftechnik nicht erreichbar war. Die Werkstoffkompatibilität, die der vollen Ausschöpfung der Vorteile der Fertigkopftechnik entgegenstand, ist mit dem erfindungsgemässen Verfahren weitgehend überwunden. Wie vorstehend erwähnt, ist die Verbindung zwischen Schulter (Teil des Kopfes) und dem Tubenrohr kritisch, d.h. die Güte der Verbindung bestimmt die Güte oder Qualität der Tube als solche. Da die Anzahl der Materialien, d.h. Kunststoffe, die sich für eine Spritz- oder Pressformgebung eines Kopfes eignen, begrenzt ist und das Material der inneren Schicht (Kunststoff) eines Rohres zu Verbindungszwecken darauf direkt abgestimmt sein muss, ergibt sich daraus eine Begrenzung der freien Wahlmöglichkeiten des Aufbaues von Kunststoffmaterialbahnen für die Tubenrohre. Mit dem erfindungsgemässen Verfahren eine Portion aus Verbindungs- und Dichtungsmaterial aus Kunststoff zur Verbindung von Tubenrohr mit Kopf benutzend, wird die aus dem Stand der Technik bekannte und dort notwendige direkte Kompatibilität eliminiert, so dass für jedes Packgut der Werkstoff für Schulter und Tubenrohr für sich packgutentsprechend optimiert werden kann.

Weitere vorteilhafte Weiterbildungen der Erfindung kennzeichnen die Merkmale der dem Patentanspruch 1 folgenden Patentansprüchen. Weitere Vorteile, Merkmale und Einzelheiten der Erfindung ergeben sich aus der folgenden Beschreibung bevorzugter Verfahrensführungen und der dazugehörenden Zeichnungen, es zeigen:
- Figur 1:: in den Figuren 1a, 1b, 1c, 1d, 1e eine erste Art Verfahrensführung bei der zuerst ein Tubenkopf auf einen Dorn und dann eine Portion aus Verbindungsmaterial auf den Tubenkopf aufgebracht wird (Abwärtspressen der Portion).
- Figur 2:: in den Figuren 2a, 2b, 2c, 2d, 2e eine zweite Art der Verfahrensführung bei der zunächst eine Portion aus Verbindungsmaterial auf den Dorn und folgend der Tubenkopf auf den Dorn mit Portion aufgebracht wird (Aufwärtspressen der Portion).
- Figur 3:: in der Figur 3a ist schematisch ein den Dorn an einer Übergangsstelle von Dornumfang zu Dornschräge umlaufender Formgebungsraum gezeigt. Fig. 3b zeigt eine Abschrägung als äusseren Umfang einer Schulter, wahlweise eine Stufung.

Fig. 1a zeigt schematisch dargestellt einen runden Dorn 10, auf dessen in axialer Richtung verlaufender Umfangsfläche ein Tubenrohr 11 aufgeschoben ist. Das obere freie Ende des Dornes 10, d.h. seine Stirnfläche**,** ist so gestaltet (konturiert), dass auf ihm ein Tubenkopf 12 vollständig mit seiner inneren Oberfläche aufliegt. Der Tubenkopf 12 wird von einer scheibenförmigen Schulter 13 gebildet, von der der hohlzylindrische Ausguss 14 abragt, in den ein zum Dorn 10 zentrischer, abragender Dornfortsatz 15 eingreift, so dass der Tubenkopf 12 genau zentrisch auf dem konturierten freien Ende des Dornes 10 gehalten ist. Gemäss Fig. 1a überragt in axialer Richtung des Dornes 10 ein ringförmigr Abschnitt 16 des Tubenrohres 11 den Übergang 17 der Dornschräge 18 zum äusseren Umfang 19 des Dornes 10 die Stirnfläche 10a. Die axiale Erstreckung des Abschnittes 16 richtet sich nach dem Abstand A mit dem die freie Umlaufkante 20 des Abschnittes 16 - gesehen von der Mittellinie M des Tubenkopfes - zur Auflage kommen soll.

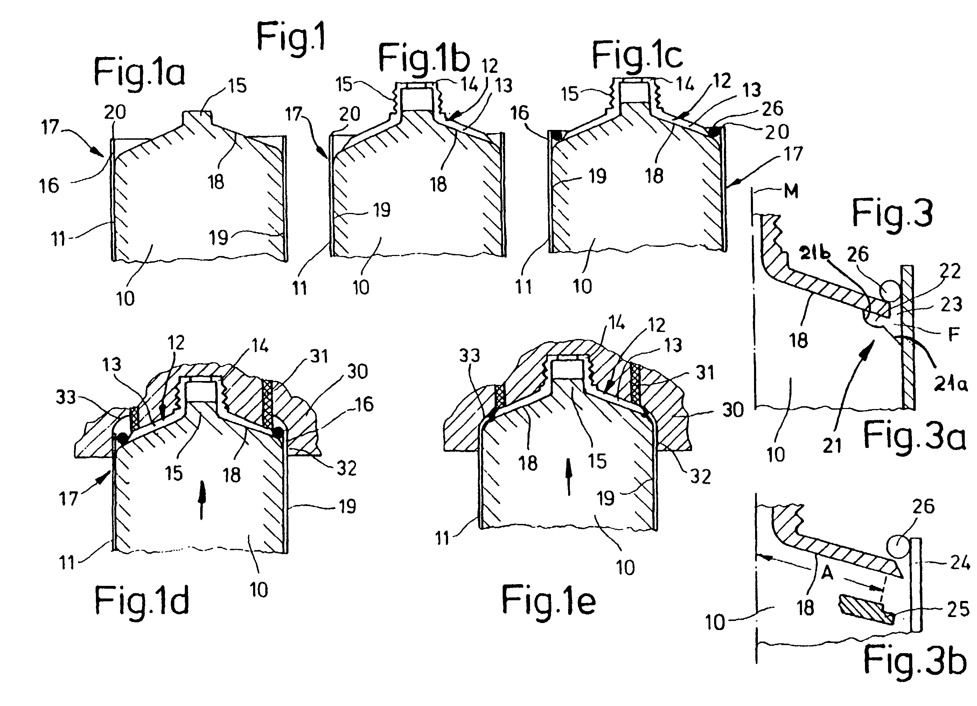

Erfindungsgemäss wird der übergang 17 der Dornschräge 18 zum äusseren Umfang 19 des Dornes 10 den Dorn 10 umlaufend mit einer Stufung 21 versehen. Zweckmässigerweise umfasst eine Stufung 21 zwei Stufen 21a, 21b, wobei die erste Stufe 21a vom äusseren Umfang des Dornes 10 in Form einer Schräge in Richtung auf die Mittellinie M ausgehend in eine zweite Stufe 21b übergeht, die ihrerseits in Dornschräge 18 ausmündet. Dabei ist der der Mittellinie M nächstliegende Durchmesser der Ausmündung, also der Umfang der Stufe 21b, so bemessen, dass er vom äusseren Umfang der Schulter 13 des Tubenkopfes 12 überdeckt wird, so dass die Stufe 21b bei auf den Dorn 10 gebrachtem Tubenkopf 12 mit der Schulter 13 eine in die Stirnfläche eingebrachte Hinterschneidung 22 bildet, während in axialer Richtung gesehen die erste Stufe 21a in Verbindung mit der inneren Umfangsfläche des Abschnittes 16 des Tubenrohres 11 und dem äusseren Umfang der Schulter 13 des Tubenkopfes 12 einen zur Schulter 13 offenen, axial zum Dorn 10 verlaufenden Ringraum 23 bildet. Wie Fig. 1c verdeutlicht, wird so durch die zweite Stufe 21b die die Schulter 13 untergreift und dem mit der zweiten Stufe 21b verbundenen Ringraum 23 (erste Stufe) ein Formgebungsraum F geschaffen, in den die durch Wärme plastifizierte Portion 26 aus Verbindungsmaterial, d.h. Kunststoff, gepresst wird.

Fig. 1b und 1c zeigen gegenüber einer parallel zur Mittellinie eines Tubenkopfes verlaufenden äusseren Umfangsfläche (nicht gezeigt) bevorzugt als Schräge 24 (Fig. 1b) oder Stufung 25 (Fig. 1c) ausgebildete Umfangsflächen. Mit 26 ist eine auf der Aussenfläche der Schulter 13 aufgebrachte Portion von Verbindungsmaterial bezeichnet. Bevorzugt ist die Portion 26, ein Ring gleichermassen bevorzugt kreis-, linsenförmigen oder tropfenförmigen Querschnittes der zweckmässigerweise an der inneren Oberfläche des Abschnittes 16, den Ringraum 23 überdeckend anliegt.

Die Fig, 1d und 1e zeigen die Mittel zur Verbindung des Tubenrohres 11 mit dem Tubenkopf 12. In Fig. 1d ist mit 30 eine ringförmige Matrize bezeichnet, in die auffahrend ein Dorn 10 mit aufgebrachtem Tubenrohr 12, Tubenkopf 13 und Materialportion 26 eingefahren ist und zwar vor Beginn des Pressvorganges, dessen Abschluss in Fig. 1e dargestellt ist. Die Matrize 30 (nur schematisch dargestellt) umfasst einen in Bewegungsrichtung des Dornes 10 vorzugsweise federvorgespannt verschiebbaren Innenring 31, der als Niederhalter des Tubenkopfes 12 auf dem Dorn und mit seinem Aussendurchmesser als eine axial verschiebbare Formgebungswandung der Formgebungskontur der Matrize 30 dient. Die Formgebungskontur der Matrize 30 wird aus einem zylindrischen Abschnitt 32 und einem konturiert im vorliegenden Fall radiusförmigen Abschnitt 33, den zylindrischen Abschnitt 32 mit der Aussenwandung des Innenringes 31 verbindend, gebildet. Der Innendurchmesser des zylindrischen Abschnittes 32 entspricht dem Aussendurchmesser des Dornes 10, dazugezählt zweimal die Wandstärke des Tubenrohres 11. Der radiusförmige Abschnitt 33 ist so bemessen, dass er den vorabdimensionierten Übergang zwischen Tubenrohr 11 und Tubenkopf 12, bzw. zwischen dem äusseren Umfang der Schulter 13 und dem Tubenrohr 11 abbildet.

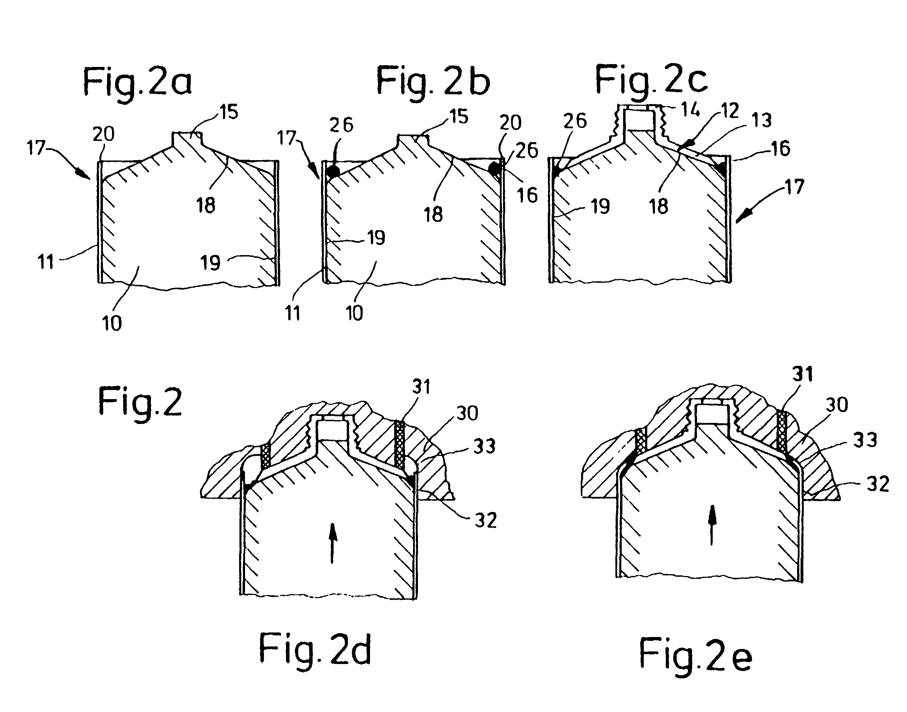

In den Fig. 2a bis 2e sind gleiche Teile wie in Fig. 1a bis 1e mit gleichen Bezugszeichen bezeichnet, wobei diese Teile auch gleiche Funktionen ausüben. Der wesentliche Unterschied bei dem Verfahren nach den Fig. 2a bis 2e besteht im Vergleich zu dem nach dem Verfahren nach den Fig. 1a bis 1e darin, dass bei dem Verfahren nach den Fig. 2a bis 2e die Materialportion 26 zuerst auf den Dorn 10, d.h. auf die Dornschräge 18 der Stirnfläche des Dornes 10 und dann der Tubenkopf 12 auf den Dorn 10 aufgebracht wird, also in umgekehrter Reihenfolge wie bei dem Verfahren nach den Fig. 1a bis 1e. Letzteres Abwärtspressen, ersteres Aufwärtspressen (jeweils nach Massgabe der Fliessrichtung des Materiales der Portion 26 bestimmt) genannt.

Das erfindungsgemässe Verfahren beschreibt entsprechend Fig. 1a bis 1e und 2a bis 2e läuft im wesentlichen in sechs Teilschritten ab. Der erste Teilschritt Fig. 1a, 2a besteht aus der Beladung eines Dornes 10 mit einem Tubenrohr 11 in der Weise, dass ein Abschnitt 16 des Tubenrohres 11 den übergang 17 der Dornschräge 18 mit dem dem äusseren Umfang 19 des Dornes 10 überragt. In einem zweiten Teilschritt Fig. 1b der ersten Art der Verfahrensführung wird ein vorgefertigter Tubenkopf 12 auf den Dorn 10 aufgebracht, wobei dieser über die Ausgussöffnung 14 und Dornfortsatz 15 zentrisch auf den Dorn 10 gehalten und von dem Abschnitt 16 beabstandet umlaufen ist. Bei der zweiten Art der Verfahrensführung wir die Materialportion 26 gemäss Fig. 2b als zweiter Verfahrensschritt zunächst auf die Dornschräge 18, den inneren Umfang des Abschnittes 16 umlaufend, also auf den Übergang 17 von Dornschräge 18 und äusserem Umfang 19 des Dornes 10 abgelegt, wonach gemäss Fig. 2c als dritter Verfahrensschritt der Tubenkopf 12 zentriert aufgebracht wird, so dass sich die Materialportion im wesentlichen unterhalb des Tubenkopfes 12 befindet. Fig. 1c als dritter Verfahrensschritt der ersten Verfahrensführung zeigt die erfolgte Aufbringung einer Portion 26 aus Verbindungsmaterial auf die der Dornschräge 18 abgewandten Seite der Schulter 13, d.h. Aussenseite der Schulter 13, vorzugsweise am inneren Umfang des Abschnittes 16 anliegend und den Umfang entlanglaufend. Die Portion 26 kann vorgefertigt und eingelegt oder durch Extrusion als Ring und auf die Schulter 13 bzw. Dornschräge 18 aufgebracht sein. Mit einem so beladenen Dorn 10 fährt dieser in eine feststehende, nach unten offene ringförmige Matrize 30 in einem vierten Verfahrensschritt Fig. 1d, 2d ein, wobei die kreisförmige Stirnfläche des Innenringes 31 in Eingriff mit der äusseren Oberfläche der Schulter 13 des Tubenkopfes 12 kommmt. Fig. 1e, 2e zeigt den fünften Verfahrensschritt und zwar die abgeschlossene Verbindung der inneren Oberfläche des Abschnittes 16 mit der Schulter 13 des Tubenkopfes 12 vermittels der Portion 26 plastifizierbaren Verbindungsmateriales. Die Verpressung vorzugsweise unter Anwendung von Wärme und Druck erfolgt durch senkrecht aufwärts gerichtetes Einfahren des beladenen Dornes 10 in die feststehende Matrize 30. Beim Einfahren wird der Innenring 31 in Richtung der Einfahrrichtung unter gleichzeitiger Niederhaltung des Tubenkopfes 12 auf den Dorn 10 verschoben, während vermittels des radiusförmigen Abschnittes 33 die Materialportion 26 entgegen der Bewegungsrichtung des Dornes 10 beispielsweise in den Ringraum 23 und Hinterschneidung 22 gepresst und der Abschnitt 16 entsprechend der Dimensionierung des radiusförmigen Abschnittes 33 soweit umgeformt wird, bis beispielsweise ein vorderes freies Ende des Abschnittes 16 mit der Schräge 24 oder Stufung 25 an der Schulter 13 in Eingriff gebracht ist. Schrägen 24 und Stufungen 25 haben technisch den Vorteil der Vergösserung der Verbindungsflächen, ästethisch haben sie die vorteilhafte Wirkung, dass die Verbindungsnaht zwischen vorderem Ende des Abschnittes 16 und der Tubenschulter 13 vollständig in der Oberfläche der Schulter aufgenommen ist.

Bei der zweiten Art der Verfahrens führung wird die Materialportion 26 in Bewegungsrichtung des Dornes 10 aufsteigend gegen die Matrize 30 verpresst. Zum Abschluss dieser Formgebung ist das Tubenrohr 11 mit dem Tubenkopf 12 unter Bildung eines gerundeten (radiusförmigen) Überganges zwischen Tubenrohr 11 und Tubenkopf 12 verbunden, wobei diese Verbindung auf der Innenseite der Tube durch das Verbindungsmaterial in der Hinterschneidung 22 in Verbindung mit dem Material im Ringraum 23 klebend am Werkstoff des Inneren der Abschnitte 16 verstärkt ist. Neben dieser Verstärkung der Verbindung wird auch eine ausgesprochen fehlerfreie Verbindung zwischen Tubenkopf 12 und Tubenrohr 11 erreicht. Während des Pressvorganges bewirkt der äussere Umfang des Innenringes in Verbindung mit der Niederhalter-Funktion auch, dass sich Verbindungsmaterial, z.B. plastifizierbarer Kunststoff, auf der äusseren Oberfläche der Schulter 13 nicht in Richtung auf den Ausguss 14 bewegen oder fliessen kann, so dass optisch eine genau abgegrenzte Fliessnaht auf der Schulter 13 abgebildet ist. Im Verhältnis zu der aus dem Stand der Technik bekannten Art des direkten Anschmelzens des Materiales des Inneren eines Tubenrohres an den äusseren Umfang eines vorgefertigten Tubenkopfes oder bei der Art der Pressformung des Kopfes bei gleichzeitiger Verbindung mit dem Tubenrohr kommt das erfindungsgemässe Verfahren als Folge der relativ geringen Menge der Portion 26 mit weit niedrigeren Wärmemengen zur Plastifizierung und Druckverschmelzung von Tubenrohr 11 und Tubenkopf 12 aus, was zur Verfestigung der Nähte, d.h. Umlaufnähte auch verkürzte Abkühlzeiten nach sich zieht. Grundsätzlich ist es nach der Erfindung möglich, eine plastifizierte Materialportion 26 bei nicht oder mässig geheizten Matrizen 30 oder nicht plastifizierte Materialportionen 26 in Verbindung mit geheizten Matrizen 30, die die Materialportionen 26 während des Pressvorganges plastifizieren, zu verwenden. Vorteile der geringeren Wärmemengen sind, im Vergleich zu den aus dem Stand der Technik bekannten Verfahren höhere Fertigungsgeschwindigkeiten, Lösung der Kristallisationsprobleme von Materialportionen in Matrizen vor Einleitung des Pressvorganges und Verfärbungen des Kunststoffes der Schultern. Im übrigen gestattet die ringförmige Matrize 30 in Verbindung mit den relativ geringen, zur Anwendung kommenden Wärmemengen, vollständig konfektionierte Tubenköpfe (Tubenköpfe mit Verschlussmembranen, Dreh- oder Klappverschlüssen etc.) mit Tubenrohren zu verbinden, indem der innere Ringraum der Matrize 30 dafür Raum zur überfahrung der Kopfbestandteile während des Pressvorganges lässt. Nach Abkühlung der erfindungsgemäss gebildeten umlaufenden Naht wird in einem sechsten Verfahrensschritt für beide Arten der Verfahrensführung gleich (zeichnerisch nicht dargestellt) der Dorn 10 durch Abstreifen des Tubenrohres 11 mit Tubenkopf 12 entladen. Die mechanischen Mittel einer Maschine, die vorstehend umrissene Verfahrensschritte auslösen und ablaufen lassen, sind vielgestaltig und werden nicht dargestellt.

## Patentansprüche

1. Verfahren zur Herstellung von Verpackungstuben, bestehend aus einem aus einem Kunststoff gebildeten Tubenrohr (11) und einem mit dem Tubenrohr (11) verbundenen, aus einem Kunststoff vorgefertigten Tubenkopf (12), bei dem das Tubenrohr (11) auf eine Umfangsfläche (19) und der Tubenkopf (12) auf eine Dornschräge (18) als Stirnfläche eines Dornes (10) aufgebracht, der Dorn (10) mit Tubenrohr (11) und Tubenkopf (12) in eine Matrize (30) eingebracht und in der Matrize (30) unter Anwendung von Wärme und Druck miteinander verbunden werden, **dadurch gekennzeichnet, dass** das Tubenrohr (11) in axialer Richtung des Dornes (10) von einer am Uebergang der Dornschräge (18) zum äusseren Umfang (19) des Dornes (10) angeordneten, die Dornschräge (18) umlaufenden Stufung (21) mit einem ringförmigen Abschnitt (16) übergreifend angeordnet, die Stufung (21) durch Aufbringung des Tubenkopfes (12) auf die Dornschräge (18) zumindest teilweise zur Bildung einer zwischen Stufung (21) und Tubenkopf (12) vorgesehenen Hinterschneidung (22) aufgebracht, eine Portion (26) Verbindungsmaterial zum Eintrag in die Stufung (21) vorgesehen und anschliessend in die Stufung (21) vermittels Wärme und Druck eingetragen wird.

2. Verfahren nach Anspruch 1, **dadurch gekennzeichnet, dass** nach Aufbringung des Tubenkopfes (12) auf die Dornschräge (18) die Portion (26) Verbindungsmateriales auf die Schulter (13) des Tubenkopfes (12) die innere Oberfläche des ringförmigen Abschnittes (16) umlaufend angeordnet wird.

3. Verfahren nach Anspruch 1, **dadurch gekennzeichnet, dass** die Portion (26) Verbindungsmateriales auf die Stufung (21) aufgebracht und folgend der Tubenkopf (12) auf die Dornschräge (18) des Dornes (10) aufgebracht wird.

4. Verfahren nach einem der Ansprüche 1 bis 3, **dadurch gekennzeichnet, dass** die Portion (26) Verbindungsmaterial in Form eines Ringes aus plastifiziertem Kunststoff aufgebracht wird.

5. Verfahren nach einem der Ansprüche 1 bis 4, **dadurch gekennzeichnet, dass** die Portion (26) Verbindungsmateriales in Form eines extrudierten Ringes aufgebracht wird.

6. Verfahren nach einem der Ansprüche 1 bis 5, **dadurch gekennzeichnet, dass** die Portion (26) Verbindungsmaterial in einem Formgebungsraum (F), umfassend eine erste sich von der Umfangsfläche des Dornes (10) auf dessen Mittellinie (M) erstreckenden Stufe (21a) und eine zweite, sich von der ersten Stufe (21a) in Richtung auf die Mittellinie (M) erstreckenden Stufe (21b) verpresst wird.

7. Verfahren nach einem der Ansprüche 1 bis 6, **dadurch gekennzeichnet, dass** die Verpressung der Portion (26) Verbindungsmaterial unter gleichzeitiger Bildung eines gerundeten Ueberganges (17) zwischen Tubenrohr (11) und Tubenkopf (12) erfolgt.

8. Verfahren nach einem der Ansprüche 1 bis 7, **dadurch gekennzeichnet, dass** die äussere Umfangsfläche der Schulter (13) des Tubenkopfes (12) als eine Stufung (25) ausgebildet ist, in die ein vorderes freies Ende des Abschnittes (16) in Eingriff gebracht wird.

9. Verfahren nach einem der Ansprüche 1 bis 8, **dadurch gekennzeichnet, dass** während der Verpressung der Tubenkopf (12) auf der Dornschräge (18) vermittels eines federvorgespannten, axial zur Matrize (30) verschiebbaren Innenring (31) gehalten wird.

## Claims

1. A process for the production of packaging tubes comprising a tube body portion (11) formed from a plastic material and a tube head (12) which is connected to the tube body portion (11) and which is prefabricated from a plastic material in which the tube body portion (11) is applied to a peripheral surface of a mandrel and the tube head (12) is applied to a bevel (18) as an end face of the mandrel (10), the mandrel (10) with tube body portion (11) and tube head (12) is introduced into a mould and in the mould the tube body portion (11) and the tube head (12) are connected together using heat and pressure, characterised thereby that the tube body portion (11) in longitudinal direction of the mandrel (10) is arranged thereon overlapping a step portion (21) revolving the bevel (18) with a ring section (16), by arrangement of the tube head (12) upon bevel (18) an undercut configuration (22) is being formed between step portion (21) and tube head (12) and that a connecting portion (26) is provided for delivery into the step portion (21) and thereafter is delivered into the step portion by way of applying heat and pressure.

2. A process according to claim 1 characterised thereby that after arranging the tube head (12) upon the bevel (18) the connecting portion (26) is being arranged upon the shoulder (13) of the tube head (12) encircling the inner surface of ring section (16).

3. A process according to claim 1 characterised thereby that the connecting portion (26) is applied upon the step portion (21) and thereafter the tube head (12) is applied to the bevel (18) of mandrel (10).

4. A process according to one of the claims 1 to 3 characterised thereby that the connecting portion (26) is being applied in form of a ring of plasticised plastic.

5. A process according to one of the claims 1 to 4 characterised thereby that the connecting portion (26) is applied in form of an extruded ring.

6. A process according to one of the claims 1 to 5 characterised thereby that the connecting portion (26) is pressed into a forming cavity (F) comprising a first step portion (21a) extending from the circumferential surface of the mandrel (10) in direction of the centreline (M) thereof and a second step portion (21b) extending from the first step portion (21a) in the direction of centreline (M).

7. A process according to one of the claims 1 to 6 characterised thereby that pressing of the connecting portion (26) occurs simultaneously with forming a rounded transition (17) between tube body (11) and tube head (12).

8. A process according to one of the claims 1 to 7 characterised thereby that the outer circumferential surface of the shoulder (13) of the tube head (12) is formed as a step portion (25) into which a front free end of section (16) is positioned.

9. A process according to one of the claims 1 to 8 characterised thereby that during the pressing operation the tube head (12) is being held on the bevel (18) by means of spring biased inner ring (31) in axial direction movable to the mould (30).

## Revendications

1. Procédé de fabrication de tubes de conditionnement, formés par un corps tubulaire (11) en matière plastique et une tête tubulaire (12) préfabriquée en matière plastique assemblée avec le corps tubulaire (11), dans lequel le corps tubulaire (11) est appliqué sur une surface périphérique (19) et la tête tubulaire (12) est appliquée sur une surface inclinée (18) formant la face frontale d'un mandrin (10), le mandrin (10) avec le corps tubulaire (11) et la tête tubulaire (12) est introduit dans une matrice (30) et lesdites parties sont assemblées l'une à l'autre dans la matrice (30) par application de chaleur et de pression, **caractérisé en ce que** le corps tubulaire (11) est disposé dans le sens axial du mandrin (10) avec en superposition un décrochement (21) avec un tronçon annulaire (16), agencé au niveau de la transition entre la surface inclinée du mandrin (18) et le contour extérieur du mandrin (10) et entourant la surface inclinée (18), le décrochement (21) est appliqué, par l'intermédiaire de la pose de la tête tubulaire (12) sur la surface inclinée du mandrin (18), au moins en partie pour former une contre-dépouille (22) prévue entre le décrochement (21) et la tête tubulaire (12), une portion (26) de matière d'assemblage est prévue pour être introduite dans le décrochement (21) et est introduite ensuite dans le décrochement (21) sous l'effet de la chaleur et de la pression.

2. Procédé selon la revendication 1, **caractérisé en ce que**, après la pose de la tête tubulaire (12) sur la surface inclinée du mandrin (18), la portion (26) de matière d'assemblage est appliquée sur l'épaulement (13) de la tête tubulaire (12) en entourant la surface intérieure du tronçon annulaire (16).

3. Procédé selon la revendication 1, **caractérisé en ce que** la portion (26) de matière d'assemblage est appliquée sur le décrochement (21) et, ensuite, la tête tubulaire (12) est posée sur la surface inclinée (18) du mandrin (10).

4. Procédé selon l'une quelconque des revendications 1 à 3, **caractérisé en ce que** la portion (26) de matière d'assemblage est appliquée sous la forme d'un anneau en matière synthétique plastifiée.

5. Procédé selon l'une quelconque des revendications 1 à 4, **caractérisé en ce que** la portion (26) de matière d'assemblage est appliquée sous la forme d'un anneau extrudé.

6. Procédé selon l'une quelconque des revendications 1 à 5, **caractérisé en ce que** la portion (26) de matière d'assemblage est comprimée dans un espace de formage (F), comprenant un premier palier (21a) qui s'étend de la périphérie du mandrin (10) vers la ligne médiane (M) de celui-ci et un deuxième palier (21b) qui s'étend du premier palier (21a) en direction de la ligne médiane (M).

7. Procédé selon l'une quelconque des revendications 1 à 6, **caractérisé en ce que** la portion (26) de matière d'assemblage est comprimée en formant simultanément une zone de transition (17) arrondie entre le corps tubulaire (11) et la tête tubulaire (12).

8. Procédé selon l'une quelconque des revendications 1 à 7, **caractérisé en ce que** la périphérie extérieure de l'épaulement (13) de la tête tubulaire (12) est conçue sous la forme d'un décrochement (25) qui entre en prise dans l'extrémité libre avant du tronçon (16).

9. Procédé selon l'une quelconque des revendications 1 à 8, **caractérisé en ce que**, pendant le processus de compression, la tête tubulaire (12) est maintenue sur la surface inclinée de mandrin (18) au moyen d'une bague intérieure (31) précontrainte par un ressort et mobile axialement par rapport à la matrice (30).
